# EUROPEAN PATENT APPLICATION

(11) **EP 4 521 513 A1**
(43) Date of publication of application: **12.03.2025**
(21) Application number: 24195977.4
(22) Date of filing: 22.08.2024
(51) Int. Cl.: H01M 10/613, H01M 10/643, H01M 10/647, H01M 10/6551, H01M 50/102, H01M 50/103, H01M 50/107, H01M 10/052

(54) **BATTERY CELL AND ELECTRIC EQUIPMENT USING THE SAME**

(30) Priority: 25.08.2023 CN 202311081746
(71) Applicant: Trina Storage Solutions (Jiangsu) Co., Ltd, Changzhou, Jiangsu 213031 (CN)
(72) Inventor: YANG, Fan, Changzhou, 213031 (CN); JIANG, Zhiyi, Changzhou, 213031 (CN); WEI, Siwei, Changzhou, 213031 (CN); CHEN, Gaojian, Changzhou, 213031 (CN)
(74) Representative: Nederlandsch Octrooibureau

(57) **Abstract**

The present disclosure belongs to the field of lithium-ion battery technology, and in particular relates to a battery cell and an electric equipment using the same. The battery cell has a heat dissipation surface, and a ratio of an area of the heat dissipation surface to a battery cell energy is 1 ~ 300 mm²/Wh. The present disclosure limits the ratio of the heat dissipation surface and the energy so as to limit the temperature rise of the battery cell.

## Description

### Technical Field

The present application mainly relates to the field of lithium-ion battery technology, and in particular relates to a battery cell and an electric equipment using the same.

### Background

Lithium-ion batteries have the advantages of long service life, environmental friendliness, high energy density, high power density, and high conversion rate. Lithium-ion batteries are not only widely used in portable electronic devices such as mobile phones, power banks and laptops, but also widely used in large and medium-sized electric equipment such as electric vehicles, electric bicycles, and power tools.

With the continuous development of lithium-ion batteries, the market has higher and higher requirements for the energy density of battery cells. Taking energy storage battery cells as an example, large-capacity battery cells are popular, and the current capacity has gradually increased from the conventional 280Ah to 320Ah. With the increase in energy density of battery cells, the design of battery cell approaches its limit under the same battery cell size. During operation, the temperature rise of the battery cell is higher than before. The temperature rise has an important impact on the chemical properties and safety performance of the battery pack. The higher the temperature rise, the worse the consistency of the battery pack becomes, which directly affects the service life of the battery pack.

### Summary

Based on the above-mentioned shortcomings and deficiencies in the prior art, one of the aims of the present disclosure is to at least solve one or more of the above-mentioned problems in the prior art. In other words, one of the aims of the present disclosure is to provide a battery cell and an electric equipment that meets one or more of the above-mentioned needs.

In order to achieve the above-mentioned aims of the disclosure, the present disclosure adopts the following technical solutions:
A battery cell, the battery cell has a heat dissipation surface, and a ratio of an area of the heat dissipation surface to a battery cell energy is 1 - 300 mm²/Wh.

As a preferred option, the shape of the battery cell is square, wherein a length is greater than a width, and the width is greater than a thickness.

As a preferred option, the area of the heat dissipation surface is the product of the length and the width, and the ratio of the area of the heat dissipation surface to the battery cell energy is 20 - 300 mm²/Wh.

As a preferred option, for the battery cell with a capacity greater than 300Ah and a temperature rise less than 10°C, the ratio of the area of the heat dissipation surface to the battery cell energy is 40 - 270 mm²/Wh;
for the battery cell with the capacity greater than 600Ah and the temperature rise less than 10°C, the ratio of the area of the heat dissipation surface to the battery cell energy is 50 - 160 mm²/Wh.

As a preferred option, for the battery cell with the capacity greater than300Ah, the ratio of the area of the heat dissipation surface to the battery cell energy is greater than 100mm²/Wh;
for the battery cell with the capacity greater than 600Ah, the ratio of the area of the heat dissipation surface to the battery cell energy is greater than 80mm²/Wh.

As a preferred option, the area of the heat dissipation surface is the product of the length and the width, the ratio of the area of the heat dissipation surface to the battery cell energy is 1 - 150 mm²/Wh.

As a preferred option, for the battery cell with the capacity greater than 300Ah, the ratio of the area of the heat dissipation surface to the battery cell energy is greater than 40mm²/Wh;
for the battery cell with the capacity greater than 600Ah, the ratio of the area of the heat dissipation surface to the battery cell energy is greater than 25mm²/Wh.

As a preferred option, for the battery cell with the capacity greater than 300Ah and the temperature rise less than 10°C, the ratio of the area of the heat dissipation surface to the battery cell energy is 40 - 120 mm²/Wh;
for the battery cell with the capacity greater than 600Ah and the temperature rise less than 10°C, the ratio of the area of the heat dissipation surface to the battery cell energy is 50 - 100 mm²/Wh.

As a preferred option, the shape of the battery cell is cylindrical.

This disclosure also provides an electric equipment comprising any of the above battery cell.

Compared with the prior art, the present disclosure has the following beneficial effects:
(1) Limiting the ratio of heat dissipation surface and energy so as to limit the temperature rise of the battery cell;
(2) Reducing trial and error costs in battery cell size;
(3) Suitable for different heat dissipation methods of battery cells (side or bottom heat dissipation);
(4) Suitable for various application scenarios such as power and energy storage
(5) Suitable for various battery types such as lithium-ion batteries and sodium-ion batteries;
(6) Suitable for square and polyhedral battery cells with multiple heat dissipation surfaces.

### Brief Description of the Drawings

Fig.1 is a schematic view of the structure of a battery cell according to an embodiment of the present disclosure;
Fig.2 is a scatter plot of the temperature rise and the area of the heat dissipation surface/battery cell energy of a battery cell with a capacity greater than 300 Ah under side heat dissipation in the embodiment of the present disclosure and the comparative example;
Fig.3 is a scatter plot of the temperature rise and the battery cell length of a battery cell with a capacity greater than 300 Ah under side heat dissipation in the embodiment of the present disclosure;
Fig.4 is a scatter plot of the temperature rise and the area of the heat dissipation surface/battery cell energy of a battery cell with a capacity greater than 300 Ah under bottom heat dissipation in the embodiment of the present disclosure and the comparative example;
Fig.5 is a scatter plot of the temperature rise and the battery cell length of a battery cell with a capacity greater than 300 Ah under bottom heat dissipation in the embodiment of the present disclosure;
Fig.6 is a scatter plot of the temperature rise and the area of the heat dissipation surface/battery cell energy of a battery cell with a capacity greater than 600 Ah under side heat dissipation in the embodiment of the present disclosure and the comparative example;
Fig.7 is a scatter plot of the temperature rise and the battery cell length of a battery cell with a capacity greater than 600 Ah under side heat dissipation in the embodiment of the present disclosure;
Fig.8 is a scatter plot of the temperature rise and the area of the heat dissipation surface/battery cell energy of a battery cell with a capacity greater than 600 Ah under bottom heat dissipation in the embodiment of the present disclosure and the comparative example;
Fig.9 is a scatter plot of the temperature rise and the battery cell length of a battery cell with a capacity greater than 600 Ah under bottom heat dissipation in the embodiment of the present disclosure.

### Preferred Embodiment of the Present Disclosure

In order to more clearly illustrate the embodiments of the present disclosure, the specific embodiments of the present disclosure will be described below with reference to the drawings. Obviously, the drawings described below are only some embodiments of the present disclosure, for those of ordinary skill in the art, other drawings and other embodiments can be obtained based on these drawings without creative work.

The prior reduces the temperature rise of battery cells by controlling the size of the battery cells, thereby increasing the cycle life of the battery cells. Under the premise of the same energy, reducing the temperature rise of the battery cells by optimizing the size of the battery cells is good measure, but the prior art does not make certain restrictions on the battery cell energy under the premise of limiting the size. With the widely use of large-capacity battery cells, it is necessary to limit the size and energy of the battery cells. Based on this, the present disclosure measures the temperature rise of battery cells for two heat dissipation methods: side heat dissipation of the battery cells (along the length*width direction) and bottom heat dissipation of the battery cells (in the length*thickness direction). For battery cells with similar capacity and energy, the ratio of the area of the heat dissipation surface to the battery cell energy is limited by limiting the temperature rise of the battery cell, so as to better guide the design of the battery cell size.

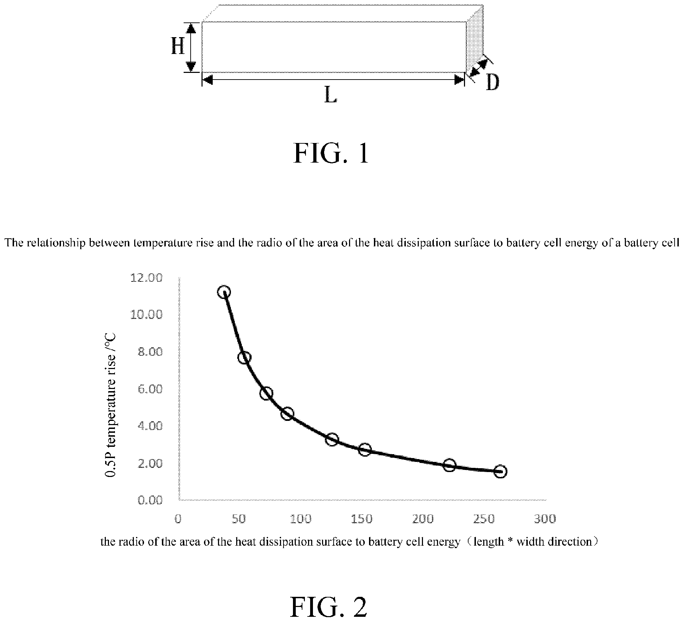

The battery cell of the embodiment of the present disclosure is described in detail by taking a square battery cell as an example. As shown in Fig. 1, the length L> the width H> the thickness D, and the battery cell has a heat dissipation surface, for example, one or more heat dissipation surfaces with a relatively large area. If the battery cell adopts side heat dissipation, the heat dissipation surface is a large surface composed of the length and the width; if the battery cell adopts bottom heat dissipation, the heat dissipation surface is a large surface composed of the length and the thickness.
1. For battery cells with capacity > 300Ah, due to the higher energy, higher requirements are placed on heat dissipation capacity. Taking the 300Ah commonly seen in the market as a comparative example, the temperature rise of the battery cells under different heat dissipation methods (side and bottom heat dissipation) is studied under the premise of meeting the capacity.

(1) The width of the battery cell is fixed, and the area of heat dissipation of the battery cell is changed by adjusting the length and thickness of the battery cell, the temperature rise of the battery cell at 0.5P charging and discharging is recorded under the same working conditions, as shown in Table 1.

**Table 1 Record of the temperature rise of the battery cell 0.5P charging and discharging under the same working conditions**

| | capacity > 300Ah | | | | | | | |
|---|---|---|---|---|---|---|---|---|
| length L> width H> thickness D /mm | compara tive example 1 | embod iment 1 | embod iment 2 | embod iment 3 | embod iment 4 | embod iment 5 | embod iment 6 | embod iment 7 |
| length L | 204 | 300 | 400 | 500 | 700 | 850 | 1250 | 1500 |
| width H | 173 | 173 | 173 | 173 | 173 | 173 | 173 | 173 |
| thickness D | 72 | 49 | 36.8 | 29.5 | 21.1 | 17.4 | 11.9 | 10 |
| capacity Cap./Ah | 302 | 302 | 302 | 303 | 303 | 304 | 306 | 308 |
| Energy Eng./Wh | 966 | 966 | 968 | 970 | 971 | 972 | 978 | 986 |
| area of the heat dissipation surface (length* width direction)/mm² | 35292 | 51900 | 69200 | 86500 | 12110 0 | 14705 0 | 21625 0 | 25950 0 |
| are/energy (length* thickness direction) / mm²/Wh | 15.21 | 15.21 | 15.21 | 15.21 | 15.21 | 15.21 | 15.21 | 15.21 |
| are/energy (length* width direction) /mm²/Wh | 36.55 | 53.71 | 71.51 | 89.21 | 124.72 | 151.24 | 221.14 | 263.16 |
| tempera-ture rise/ °C | 11.20 | 7.62 | 5.71 | 4.57 | 3.26 | 2.69 | 1.83 | 1.52 |

It can be seen from the data in the above table that after the width of the battery cell is fixed, as the length of the battery cell increases, the heat dissipation surface with the battery cell's length * width continues to increase, and the temperature rise of the battery cell 0.5P charging and discharging continues to decrease.

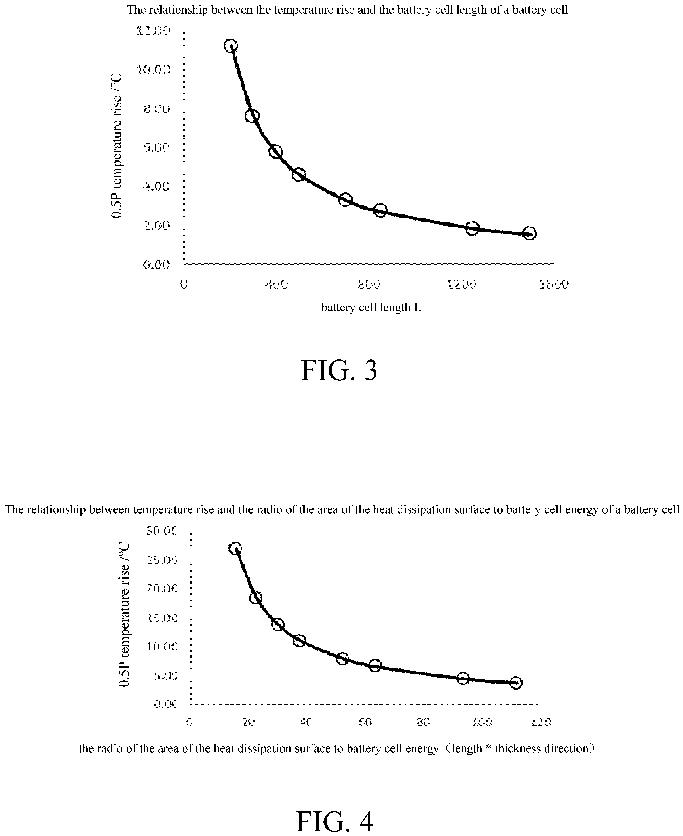

After the data is plotted into a scatter plot, as shown in Fig. 2 and Fig. 3, we can intuitively understand the effect of the heat dissipation surface (length*width direction) on the temperature rise of the battery cell; when the battery cell adopts the side heat dissipation method, the ratio of area of the heat dissipation surface/battery cell energy> 100, and when the battery cell length>500, the rate of reduction of the battery cell temperature rise is already very low; therefore, when the battery cell capacity is>300Ah and the side heat dissipation method is adopted, the ratio of area of the heat dissipation surface/battery cell energy is preferably>100. If the limit of battery cell temperature rise has been determined, it can be directly corresponded to the heat dissipation surface/battery cell energy and length required for the battery cell, providing direction for battery cell size design.

(2) The thickness of the battery cell is fixed, and the area of heat dissipation of the battery cell is changed by adjusting the length and width of the battery cell, the temperature rise of the battery cell at 0.5P charging and discharging is recorded under the same working conditions, as shown in Table 2.

**Table 2 Record of the temperature rise of the battery cell 0.5P charging and discharging under the same working conditions**

| | capacity > 300Ah | | | | | | | |
|---|---|---|---|---|---|---|---|---|
| length L> width H> thickness D /mm | comparati ve example 1 | embod iment 1 | embod iment 2 | embod iment 3 | embod iment 4 | embod iment 5 | embod iment 6 | embod iment 7 |
| length L | 204 | 300 | 400 | 500 | 700 | 850 | 1250 | 1500 |
| width H | 173 | 117.7 | 88.3 | 70.7 | 50.5 | 41.6 | 28.3 | 23.6 |
| thickness D | 72 | 72 | 72 | 72 | 72 | 72 | 72 | 72 |
| capacity Cap./Ah | 302 | 302 | 302 | 302 | 302 | 302 | 302 | 303 |
| Energy Eng./Wh | 966 | 966 | 966 | 967 | 967 | 967 | 968 | 969 |
| area of the heat dissipation surface (length* width direction)/mm² | 14688 | 21600 | 28800 | 36000 | 50400 | 61200 | 90000 | 10800 0 |
| are/energy (length* thickness direction) / mm²/Wh | 36.55 | 36.55 | 36.55 | 36.55 | 36.55 | 36.55 | 36.55 | 36.55 |
| are/energy (length* width direction) /mm²/Wh | 15.21 | 22.36 | 29.80 | 37.22 | 52.11 | 63.26 | 92.99 | 111.5 1 |
| tempera-ture rise/°C | 26.91 | 18.30 | 13.72 | 10.98 | 7.84 | 6.46 | 4.39 | 3.66 |

It can be seen from the data in the table 2 that after the thickness of the battery cell is fixed, as the length of the battery cell increases, the heat dissipation surface with the battery cell's length * thickness continues to increase, and the temperature rise of the battery cell 0.5P charging and discharging continues to decrease.

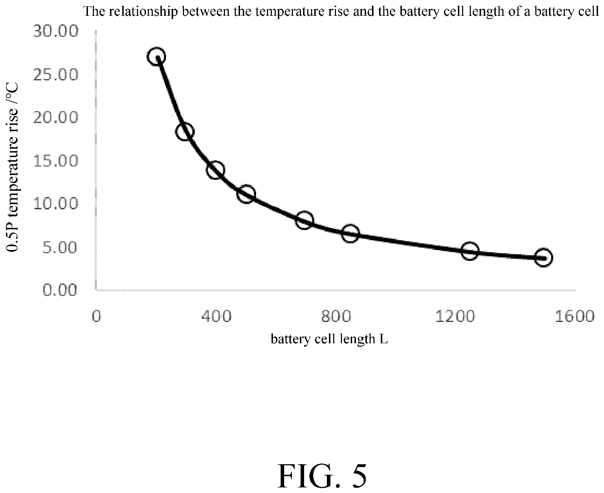

After the data is plotted into a scatter plot, as shown in Fig. 4 and Fig. 5, we can intuitively understand the effect of the heat dissipation surface (length*thickness direction) on the temperature rise of the battery cell; when the battery cell adopts the bottom heat dissipation method, the ratio of area of the heat dissipation surface/battery cell energy>40, and when the battery cell length>500, the rate of reduction of the battery cell temperature rise is already very low; therefore, when the battery cell capacity is>300Ah and the bottom heat dissipation method is adopted, the ratio of area of the heat dissipation surface/battery cell energy is preferably>40.

Extracting points from the scatter plot, we can see that when the temperature rise of the battery cell needs to be controlled <10°C, the ratio of area of heat dissipation surface/battery cell energy of the battery cell needs to >40; when the temperature rise of the battery cell needs to be controlled <5°C, the ratio of area of heat dissipation surface/battery cell energy of the battery cell needs to >80.

If the limit of battery cell temperature rise has been determined, it can be directly corresponded to the required area of the heat dissipation surface/battery cell energy and length, providing direction for the battery cell size design.

2. For battery cells with capacity > 600Ah, due to the higher energy, higher requirements are placed on heat dissipation capacity, taking the 300Ah*2 commonly seen in the market as a comparative example, the temperature rise of the battery cells under different heat dissipation methods (side and bottom heat dissipation) is studied under the premise of meeting the capacity.
(1) The width of the battery cell is fixed, and the area of heat dissipation of the battery cell is changed by adjusting the length and thickness of the battery cell, the temperature rise of the battery cell at 0.5P charging and discharging is recorded under the same working conditions, as shown in Table 3.

**Table 3 Record of the temperature rise of the battery cell 0.5P charging and discharging under the same working conditions**

| | capacity > 600Ah | | | | | | | |
|---|---|---|---|---|---|---|---|---|
| length L> width H> thickness D /mm | comparati ve example 1 | embod iment 1 | embodi ment 2 | embodi ment 3 | embodi ment 4 | embodi ment 5 | embodi ment 6 | embodi ment 7 |
| length L | 346 | 400 | 500 | 600 | 700 | 850 | 1250 | 1500 |
| width H | 204 | 204 | 204 | 204 | 204 | 204 | 204 | 204 |
| thickness D | 72 | 62.3 | 49.9 | 41.6 | 35.7 | 29.4 | 20 | 16.7 |
| capacity Cap./Ah | 603 | 604 | 604 | 605 | 605 | 605 | 606 | 607 |
| Energy Eng./Wh | 1931 | 1932 | 1934 | 1935 | 1937 | 1937 | 1938 | 1942 |
| area of the heat dissipation surface (length* width direction)/m m² | 70584 | 81600 | 102000 | 122400 | 142800 | 173400 | 255000 | 306000 |
| are/energy (length* thickness direction) / mm²/Wh | 12.90 | 12.90 | 12.90 | 12.90 | 12.90 | 12.90 | 12.90 | 12.90 |
| are/energy (length* width direction) /mm²/Wh | 36.55 | 42.24 | 52.74 | 63.26 | 73.71 | 89.51 | 131.58 | 157.58 |
| tempera-ture rise/°C | 14.5 | 12.54 | 10.03 | 8.36 | 7.17 | 5.90 | 4.01 | 3.34 |

It can be seen from the data in the above table that after the width of the battery cell is fixed, as the length of the battery cell increases, the heat dissipation surface with the battery cell's length * width continues to increase, and the temperature rise of the battery cell 0.5P charging and discharging continues to decrease.

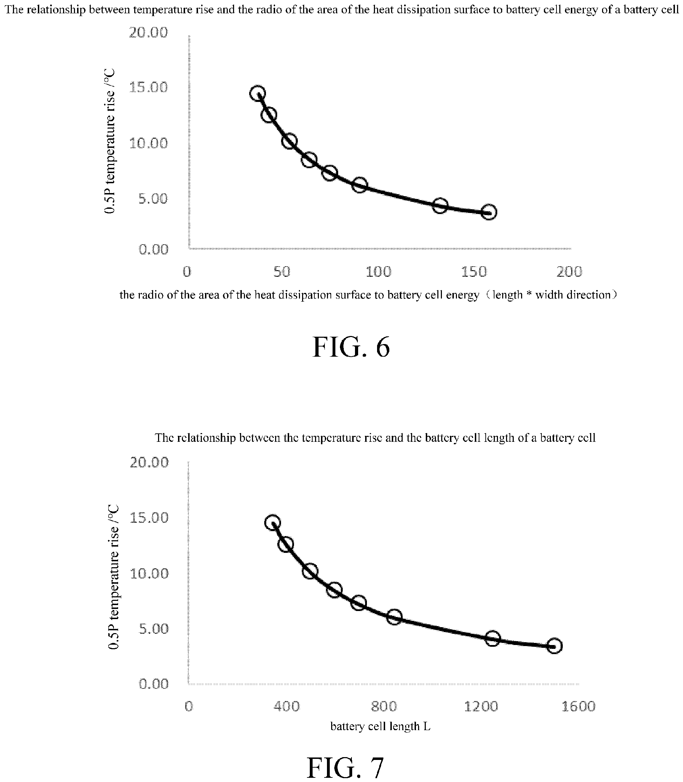

After the data is plotted into a scatter plot, as shown in Fig. 6 and Fig. 7, we can intuitively understand the effect of the heat dissipation surface (length*width direction) on the temperature rise of the battery cell; when the battery cell adopts the side heat dissipation method, the ratio of area of the heat dissipation surface/battery cell energy>80, and when the battery cell length>800, the rate of reduction of the battery cell temperature rise is already very low; therefore, when the battery cell capacity is>600Ah and the side heat dissipation method is adopted, the ratio of area of the heat dissipation surface/battery cell energy is preferably>80.

If the limit of battery cell temperature rise has been determined, it can be directly corresponded to the heat dissipation surface/battery cell energy and length required for the battery cell, providing direction for battery cell size design.

(2) The thickness of the battery cell is fixed, and the area of heat dissipation of the battery cell is changed by adjusting the length and width of the battery cell, the temperature rise of the battery cell at 0.5P charging and discharging is recorded under the same working conditions, as shown in Table 4.

**Table 4 Record of the temperature rise of the battery cell 0.5P charging and discharging under the same working conditions**

| | capacity> 600Ah | | | | | | | |
|---|---|---|---|---|---|---|---|---|
| length L> width H> thickness D /mm | comparati ve example 1 | embod iment 1 | embod iment 2 | embod iment 3 | embod iment 4 | embod iment 5 | embod iment 6 | embod iment 7 |
| length L | 346 | 400 | 500 | 600 | 700 | 800 | 1250 | 1500 |
| width H | 204 | 176.5 | 141.2 | 117.7 | 100.9 | 88.3 | 72 | 72 |
| thickness D | 72 | 72 | 72 | 72 | 72 | 72 | 56.6 | 47.2 |
| capacity Cap./Ah | 603 | 604 | 604 | 604 | 604 | 604 | 605 | 605 |
| Energy Eng./Wh | 1931 | 1932 | 1932 | 1932 | 1932 | 1933 | 1936 | 1937 |
| area of the heat dissipation surface (length* width direction)/mm² | 24912 | 28800 | 36000 | 43200 | 50400 | 57600 | 70750 | 70800 |
| are/energy (length* thickness direction) / mm²/Wh | 36.55 | 36.55 | 36.55 | 36.55 | 36.55 | 36.55 | 46.49 | 55.75 |
| are/energy (length* width direction) /mm²/Wh | 12.90 | 14.91 | 18.64 | 22.36 | 26.08 | 29.80 | 36.55 | 36.55 |
| tempera-ture rise/ °C | 41.08 | 35.54 | 28.43 | 23.69 | 20.31 | 17.77 | 14.47 | 14.46 |

It can be seen from the data in the above table 4 that after the thickness of the battery cell is fixed, as the length of the battery cell increases, the heat dissipation surface with the battery cell's length * thickness continues to increase, and the temperature rise of the battery cell 0.5P charging and discharging continues to decrease.

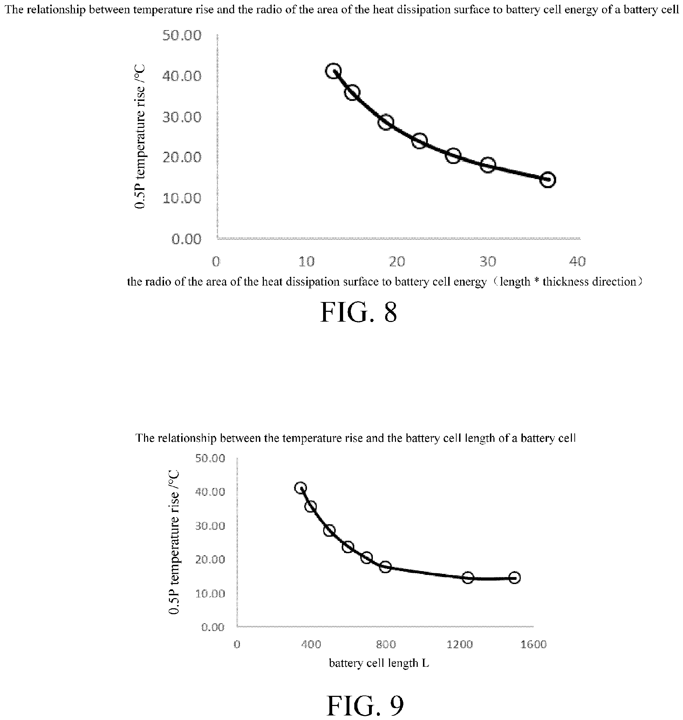

After the data is plotted into a scatter plot, as shown in Fig. 8 and Fig. 9, we can intuitively understand the effect of the heat dissipation surface (length*thickness direction) on the temperature rise of the battery cell; when the battery cell adopts the bottom heat dissipation method, the ratio of area of the heat dissipation surface/battery cell energy>25, and when the battery cell length>800, the rate of reduction of the battery cell temperature rise is already very low; therefore, when the battery cell capacity is>600Ah and the bottom heat dissipation method is adopted, the ratio of area of the heat dissipation surface/battery cell energy is preferably>25.

Extracting points from the scatter plot, we can see that when the temperature rise of the battery cell needs to be controlled <10°C, the area of heat dissipation surface/battery cell energy of the battery cell needs to >50; when the temperature rise of the battery cell needs to be controlled <5°C, the ratio of area of heat dissipation surface/battery cell energy of the battery cell needs to >100.

In summary, the battery cell of the embodiment of the present disclosure has a heat dissipation surface, and the ratio of the area of the heat dissipation surface to the battery cell energy is 1-300 mm²/Wh, and the specific value can be determined according to actual application requirements.

If the battery cell adopts side heat dissipation, that is the area of the heat dissipation surface is the product of the length and the width, and the ratio of the area of the heat dissipation surface to the battery cell energy is 20 - 300 mm²/Wh. Preferably for the battery cell with a capacity >300Ah and a temperature rise< 10°C, the ratio of the area of the heat dissipation surface to the battery cell energy is 40 - 270 mm²/Wh; for the battery cell with the capacity>600Ah and the temperature rise< 10°C, the ratio of the area of the heat dissipation surface to the battery cell energy is 50 - 160 mm²/Wh. In addition, it can also be determined according to the following conditions: for the battery cell with the capacity > 300Ah, the ratio of the area of the heat dissipation surface to the battery cell energy is greater than 100mm²/Wh; for the battery cell with the capacity> 600Ah, the ratio of the area of the heat dissipation surface to the battery cell energy is greater than 80mm²/Wh.

If the battery cell adopts bottom heat dissipation, that is the area of the heat dissipation surface is the product of the length and the thickness, the ratio of the area of the heat dissipation surface to the battery cell energy is 1 - 150 mm²/Wh. Preferably, for the battery cell with the capacity >300Ah, the ratio of the area of the heat dissipation surface to the battery cell energy is greater than 40mm²/Wh; for the battery cell with the capacity> 600Ah, the ratio of the area of the heat dissipation surface to the battery cell energy is greater than 25mm²/Wh. Further, for the battery cell with the capacity > 300Ah and the temperature rise< 10°C, the ratio of the area of the heat dissipation surface to the battery cell energy is 40 - 120 mm²/Wh; for the battery cell with the capacity> 600Ah and the temperature rise< 10°C, the ratio of the area of the heat dissipation surface to the battery cell energy is 50 ~ 100 mm²/Wh.

In summary, the present disclosure limits the ratio of the area of the heat dissipation surface to battery cell energy by limiting the temperature rise of the battery cell, so as to better guide the design of the battery cell size.

In addition, the solution of the present disclosure is also applicable to the size design of a battery cell with a cylindrical shape, and can be adaptively adjusted according to changes in the shape.

The battery cell designed by the present disclosure can be used to meet the power needs of electric vehicles, electric tools, portable electronic devices, etc.

The above description is only a detailed description of the preferred embodiments and principles of the present disclosure. For ordinary technicians in this field, according to the ideas provided by the present disclosure, there will be changes in the specific embodiments, and these changes should also be regarded as the protection scope of the present disclosure.

## Claims

1. A battery cell **characterized in that**, the battery cell has a heat dissipation surface, and a ratio of an area of the heat dissipation surface to a battery cell energy is 1 - 300 mm²/Wh.

2. The battery cell according to claim 1, **characterized in that** the shape of the battery cell is square, wherein a length is greater than a width, and the width is greater than a thickness.

3. The battery cell according to claim 2, **characterized in that** the area of the heat dissipation surface is the product of the length and the width, and the ratio of the area of the heat dissipation surface to the battery cell energy is 20 - 300 mm²/Wh.

4. The battery cell according to claim 3, **characterized in that** for the battery cell with a capacity greater than 300Ah and a temperature rise less than 10°C, the ratio of the area of the heat dissipation surface to the battery cell energy is 40 - 270 mm²/Wh;
for the battery cell with the capacity greater than 600Ah and the temperature rise less than 10°C, the ratio of the area of the heat dissipation surface to the battery cell energy is 50 - 160 mm²/Wh.

5. The battery cell according to claim 3, **characterized in that** for the battery cell with the capacity greater than 300Ah, the ratio of the area of the heat dissipation surface to the battery cell energy is greater than 100mm²/Wh;
for the battery cell with the capacity greater than 600Ah, the ratio of the area of the heat dissipation surface to the battery cell energy is greater than 80mm²/Wh.

6. The battery cell according to claim 2, **characterized in that** the area of the heat dissipation surface is the product of the length and the thickness, the ratio of the area of the heat dissipation surface to the battery cell energy is 1 - 150 mm²/Wh.

7. The battery cell according to claim 6, **characterized in that** for the battery cell with the capacity greater than 300Ah, the ratio of the area of the heat dissipation surface to the battery cell energy is greater than 40mm²/Wh;
for the battery cell with the capacity greater than 600Ah, the ratio of the area of the heat dissipation surface to the battery cell energy is greater than 25mm²/Wh.

8. The battery cell according to claim 7, **characterized in that** for the battery cell with the capacity greater than 300Ah and the temperature rise less than 10°C, the ratio of the area of the heat dissipation surface to the battery cell energy is 40 - 120 mm²/Wh;
for the battery cell with the capacity greater than 600Ah and the temperature rise less than 10°C, the ratio of the area of the heat dissipation surface to the battery cell energy is 50 - 100 mm²/Wh.

9. The battery cell according to claim 1, **characterized in that** the shape of the battery cell is a cylindrical.

10. An electric equipment comprising the battery cell according to any one of claims 1 - 9.
